# EUROPÄISCHE PATENTSCHRIFT

(11) **EP 0 940 278 B1**
(45) Veröffentlichungstag und Bekanntmachung des Hinweises auf die Patenterteilung: **23.06.2004**
(21) Anmeldenummer: 99890067.4
(22) Anmeldetag: 25.02.1999
(51) Int. Cl.: B60J 5/12

(54) **Teleskop für Schwenkschiebetüren von Fahrzeugen**
Telescopic mechanism for pivoting sliding doors of vehicles
Mécanisme télescopique pour portes pivotantes coulissantes de véhicules

(30) Priorität: 05.03.1998 AT 38998
(43) Veröffentlichungstag der Anmeldung: 08.09.1999
(73) Patentinhaber: Knorr-Bremse Gesellschaft mit beschränkter Haftung, 2340 Mödling (AT)
(72) Erfinder: Fink, Martin, Ing., 3340 Waidhofen a.d. Ybbs (AT)
(74) Vertreter: Patentanwälte BARGER, PISO & PARTNER

(56) Entgegenhaltungen:
- EP-A- 0 492 743
- DE-A- 2 154 426
- US-A- 3 728 819
- US-A- 4 541 201
- US-A- 5 142 823
- PATENT ABSTRACTS OF JAPAN vol. 1998, no. 04, 31. März 1998 (1998-03-31) & JP 09 317305 A (OI SEISAKUSHO CO LTD), 9. Dezember 1997 (1997-12-09)

## Beschreibung

Die Erfindung betrifft ein Teleskop für Schwenkschiebetüren von Fahrzeugen, wobei ein fahrzeugseitiger Teil des Teleskopes eine Bewegung im wesentlichen normal zur Türblattebene vollführt, ein türblattseitiger Teil des Teleskopes im wesentlichen entlang des fahrzeugseitigen Teils verfahrbar ist, wobei zumindest ein Schlitten als Zwischenteil vorgesehen ist, der entlang der beiden anderen Teile verfahrbar ist und so die teleskopische Bewegung sicherstellt, wobei der fahrzeugseitige Teil aus einem im wesentlichen rechteckigen Profil besteht, das an seiner Unterseite einen Längsschlitz aufweist, aber ansonsten im wesentlichen geschlossen ist, und wobei der Schlitten durch den Längsschlitz in den fahrzeugseitigen Teleskopteil ragt, entsprechend dem einleitenden Teil des Anspruches 1.
Ein derartiges Teleskop ist aus der DE 21 54 426 A bekannt. Dabei wird zur Führung des Telekops ausschließlich eine Doppelkugelführung, ein teures und präzise Justierung verlangendes Bauteil, geoffenbart, was in Anbetracht der angestrebten langen Lebensdauer und der mechanischen, insbesondere dynamischen Belastungen verständlich ist. In der Praxis hat sich diese Konstruktion wegen der großen Empfindlichkeit, insbesondere gegen eindringenden Schmutz, und der hohen Kosten, nicht zufriedenstellend bewährt.
Weiters sind aus der US 4 541 201 A und der JP 09 317 305 A wagenkastenfeste Führungen für Schwenkschiebetüren von Kraftfahrzeugen bekannt, die aber keine Teleskope aufweisen. Dabei beschäftigt sich die JP-A mit dem Problem des in die Führungen eindringenden Schmutzes (im Gegensatz zur US-A, die diese Frage nicht berührt) und schlägt vor, diesen durch eine Art Rakel in eine Nut der Führung zu schieben. Was geschieht, wenn die Nut voll ist, wird nicht ausgeführt.
Teleskope sind an sich seit langem bekannt und werden auch auf dem Gebiet der Schwenkschiebtüren, insbesondere der Schwenkschiebetüren von Verkehrsmitteln, seit längerem verwendet. Sie weisen den Vorteil auf, daß sie bei entsprechender Auslegung in der Lage sind, die Türblätter nicht nur zu führen, sondern auch zu tragen und ermöglichen zufolge ihrer Konstruktion, daß die Türöffnung, wie sie im Türrahmen vorgegeben ist, im wesentlichen vollständig zum Ein- und Aussteigen zur Verfügung steht, wenn die Türblätter vollständig geöffnet sind.
Nachteilig an bisher bekanntgewordenen Teleskopen ist, daß zufolge der relativ großen Kräfte und Momente, die sie zu übertragen haben und den Widrigkeiten der Witterung, denen sie im rauhen täglichen Betrieb ausgesetzt sind, ihre Lebensdauer unbefriedigend kurz ist, wobei zu bedenken ist, daß derartige Teleskope zufolge der Führungsaufgaben schon dann ersetzt werden müssen, wenn sie durchaus noch in der Lage wären, das Türblatt weiterhin zu tragen, aber die notwendige Führungsgenauigkeit durch Eindringen von Schmutz und korrodierenden Medien und dem dadurch bedingten Korrosionsprozeß der Schienen und Führungen nicht mehr gegeben ist.
Die Erfindung bezweckt hier Abhilfe zu schaffen und schlägt ein Teleskop vor, das zufolge seiner Ausgestaltung das Eindringen von Schmutz, von Regen- und Schmelzwasser u.dgl. im wesentlichen ausschließt.
Erfindungsgemäß ist dazu gemäß dem kennzeichnenden Teil des Anspruches 1 vorgesehen, daß der Schlitten mittels Rollen im fahrzeugseitigen Teleskopteil geführt ist und daß der fahrzeugseitige Teleskopteil ohne unten geschlossene Taschen ausgeführt ist.
Durch diese Maßnahme erschwert man das Eindringen bzw. verhindert zuverlässig das Ansammeln von Schmutz- und Regenwasser in den fahrzeugseitigen Teleskopteil, man erleichtert das Abfließen von Wasser, das Herausfallen von Fremdkörpern und Schmutz aus dem Teleskop und erhält durch die Rollen eine robuste Führung.
In einer Ausgestaltung ist der türblattseitige Teleskopteil ähnlich ausgebildet, wobei zur Gewährleistung der Führungsfunktion für das Türblatt eine Zweiteilung der Führungsbahnen vorteilhaft ist, die erfindungsgemäß so erfolgt, daß die horizontal-führenden Bahnen in einem Profilbereich angeordnet sind, der die Form eines umgekehrten "U" aufweist, und daß die vertikal-führenden Bahnen in einem zum Wagenkasten hin offenen, C-förmigen und bevorzugt unterhalb der horizontal-führenden Bahnen liegenden Profilbereich angeordnet sind.
Auf diese Weise verhindert man wirkungsvoll, daß die horizontal-führenden Bahnen verschmutzen und stellt sicher, daß die vertikal-führenden Bahnen bestmöglich geschützt sind und durch die offene, aber dem Wagenkasten zugewandte und von den horizontal-führenden Bahnen überdeckte Ausgestaltung Schmutz und Flüssigkeiten nur geringe Zutrittsmöglichkeiten gewähren und dabei die besten Möglichkeiten einer Selbstreinigung und Abtrocknung sicherstellen.
Die Erfindung wird im folgenden an Hand der Zeichnung näher erläutert. Dabei sind zwei unterschiedliche Aufhängungsformen für eine mit dem erfindungsgemäßen Teleskop ausgestattete Schwenkschiebetüre dargestellt.
Die Fig. 1 zeigt eine erfindungsgemäße Türe im Teleskop-Bereich in Frontalansicht und in einem horizontalen Schnitt in geschlossenem Zustand,
die Fig. 2 zeigt zwei Ansichten analog zur Fig. 1, aber bei geöffneter Tür,
die Fig. 3 zeigt einen Schnitt entlang der Linie III-III in Fig.1,
die Fig. 4 zeigt einen Schnitt entlang der Linie IV-IV der Fig. 1,
die Fig. 5 zeigt einen Schnitt entlang der Linie V-V der Fig. 1,
die Fig. 6 zeigt einen Schnitt ähnlich der Fig. 3, aber in ausgefahrener Lage der Tür,
die Fig. 7 zeigt eine zweite Möglichkeit, die Ausschwenkbewegung zu bewerkstelligen, stellt aber ansonsten eine analoge Ansicht zur Fig. 1 dar,
die Fig. 8 zeigt die Vorrichtung der Fig. 7 in der Lage der Fig. 2,
die Fig. 9 ist ein Schnitt entlang der Linie IX-IX der Fig. 7 und
die Fig. 10 ist ein Schnitt ähnlich dem der Fig. 9, aber in ausgefahrener Lage der Tür.

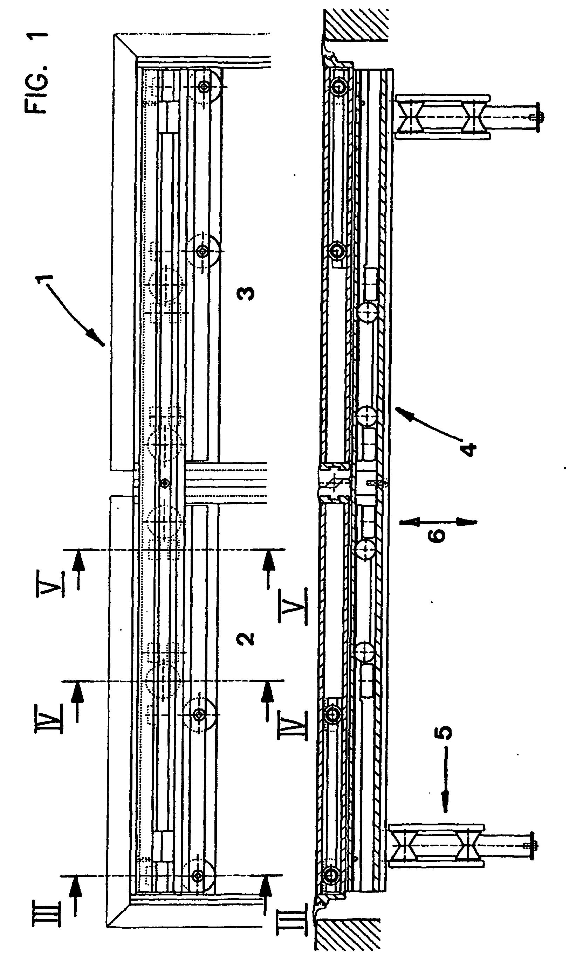

In Fig. 1 ist die obere Darstellung eine frontale Draufsicht auf eine erfindungsgemäß ausgestattete Tür 1 mit zwei Flügeln 2, 3 mit einem in seiner Gesamtheit mit 4 bezeichneten Teleskop-Mechanismus, in der geschlossenen Lage der Tür.

Die untere Darstellung der Fig. 1 zeigt einen horizontalen Schnitt durch die in der oberen Darstellung gezeigte Tür 1 im Bereich des Teleskop-Mechanismus 4.

Der TelesKop-Mechanismus 4 wird bei der in den Fig. 1 bis 6 dargestellten Variante durch einen Schubmechanismus 5 normal zur Türblattebene in Richtung des Doppelpfeiles 6 ausgestellt bzw. eingezogen.

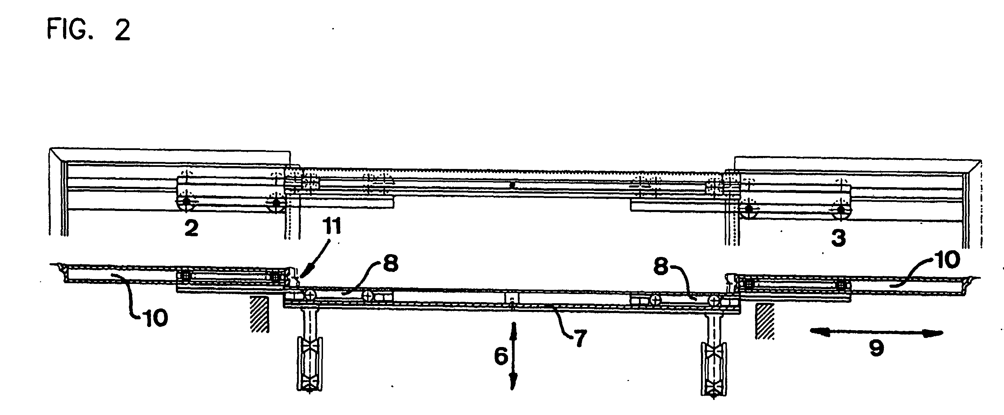

Die Fig. 2 zeigt Darstellungen ähnlich der Fig. 1, aber bei geöffneter Türe 1. Wie aus einer Zusammenschau von Fig. 1 und Fig. 2 hervorgeht, bewegt sich der fahrzeugseitige Teil 7 des Teleskops nur während der Ausstellbewegung und nur in Richtung des Doppelpfeiles 6. In diesem fahrzeugseitigen Teil 7 gleitet jeweils ein Schlitten 8 für jedes der Türblätter 2, 3. Jeder dieser Schlitten 8 besteht aus einem Abschnitt, der im wagenseitigen Teil 7 gleitet und aus einem dazu in Richtung der Teleskop-Achse 9 versetzten Abschnitt, der in einem türblattseitigen Teil 10 des Teleskopes gleitet.

Um eine möglichst große Öffnungsbewegung des Türblattes 2 bzw. 3 in Richtung des Teleskopes 9, die ja auch die Öffnungsrichtung ist, zu ermöglichen, sind die beiden Schlittenteile soweit es mechanisch möglich ist, zueinander versetzt. Sie hängen de facto nur in einem kleinen Übergangsbereich 11 miteinander zusammen.

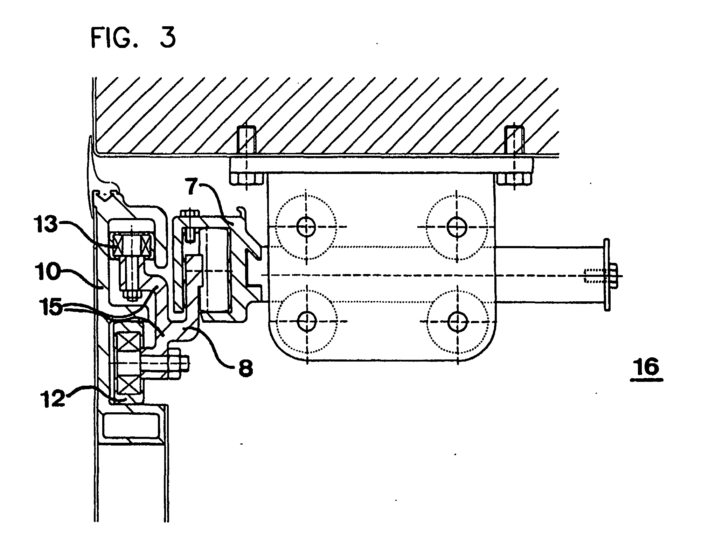

Aus den Fig. 3, 4 und 5 ist der detaillierte Aufbau sowohl des Schlittens 8 als auch des fahrzeugseitigen Teiles 7 und des türblattseitigen Teiles 10 zu entnehmen:

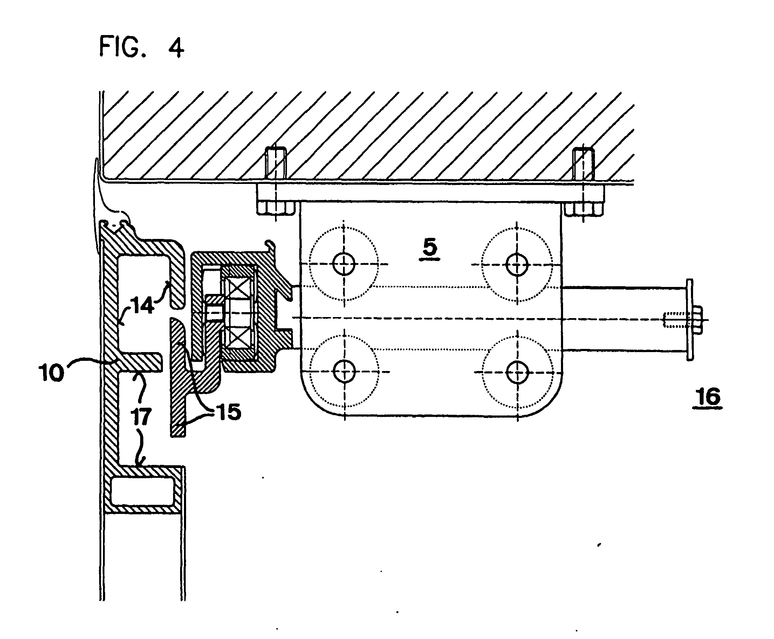

Die Fig. 3 zeigt einen Vertikalschnitt normal zur Teleskop-Achse 9 im Bereich einer Tragrolle 12 des Schlittens 8. Im gleichen axialen Bereich der Teleskop-Achse 9 ist auch eine horizontale Führungsrolle 13 am Schlitten 8 vorgesehen. Wie eingangs erwähnt, laufen diese türblattseitigen Führungsrollen auf Laufflächen des türblattseitigen Teiles 10, die so ausgebildet sind, daß sie einerseits die notwendigen Kräfte und Momente übertragen können, anderseits unempfindlich gegen Schmutz und Spritzwasser sind. Zu diesem Zweck weist der türblattseitige Teil 10 im Bereich der Laufflächen 14 (Fig. 4) für die horizontale Führungsrolle 13 die Form eines nahezu geschlossenen C auf. Die Öffnung, durch die ein Steg 15 des Schlittens 8 tritt, liegt im unteren und dem Wagenkasten 16 zugewandten Teil der türblattseitigen Schiene 10.

Die Tragflächen 17 (Fig. 4) sind ähnlich gut geschützt, da der türblattseitige Teil 10 sich in diesem Bereich nur gegen den Wagenkasten 16 hin öffnet und da dieser Bereich unterhalb des Bereiches der horizontalen Führungsbahnen 14, somit relativ gut geschützt liegt.

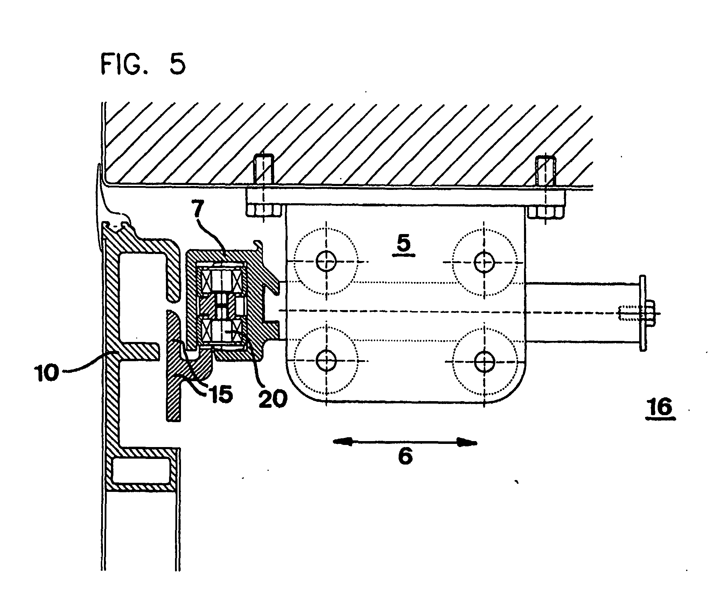

Der Schlitten unterstützt diese geschützte Anordnung noch dadurch, daß in dem Bereich, in dem er keine Rollen 12, 13 trägt, der Steg 15 (an dem die Rollen 12, 13 sitzen) so ausgebildet ist, wie aus Fig. 4 und 5 ersichtlich, so daß in diesem Bereich die Öffnungen des türblattseitigen Teiles 10 weitestgehend abgedeckt sind. Wie aus Fig. 2 hervorgeht, ist diese Öffnung nur bei geöffneter Tür und nur im Bereich der Nebenschließkante der Türblätter 2, 3 nicht abgedeckt, da der Schlitten 8 in dieser Stellung der Tür nicht in diesen Bereich ragt.

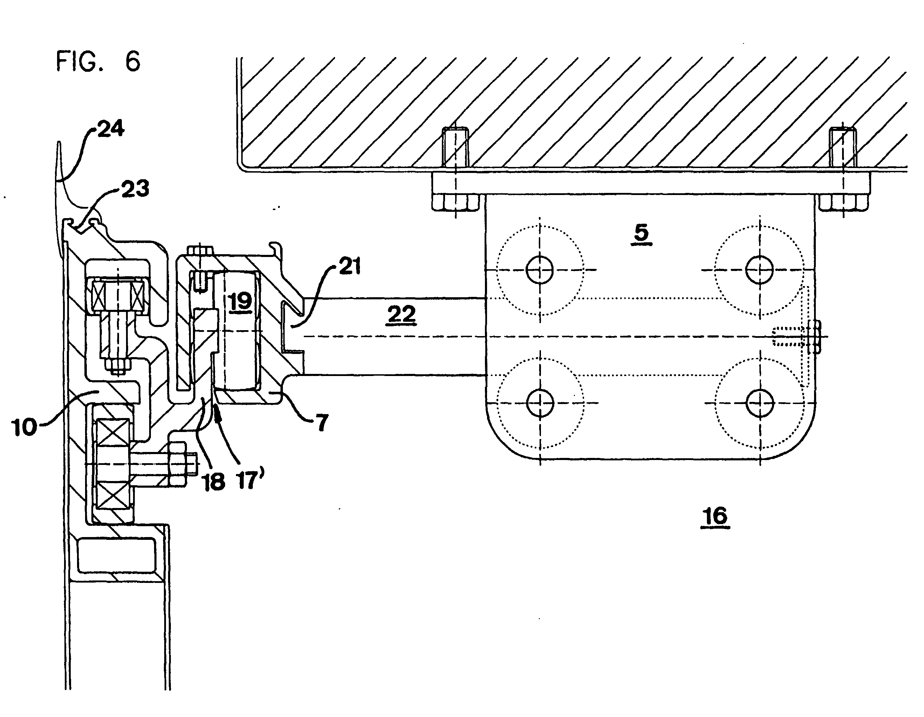

Aus Fig. 6 ist ersichtlich, wie der fahrzeugseitige Teil 7 auch in der ausgefahrenen Lage gegen das Eindringen von Schmutz, Spritzwasser u.dgl. geschützt ist: Dieser fahrzeugseitige Teil 7 besteht aus einem im wesentlichen geschlossenen Profil, das nur an seiner Unterseite einen Längsschlitz 17' aufweist, der sich über die gesamte Länge des Profiles erstreckt. Durch diesen Schlitz 17' tritt ein gebogener Arm 18 des Schlittens 8 von unten in das Innere der Schiene und trägt im Inneren der Schiene auf an sich bekannte Weise Tragrollen 19 (Fig. 6) bzw. Führungsrollen 20 (Fig. 5).

Wie aus den Fig. 3 bis 6 hervorgeht, weist im dargestellten bevorzugten Ausführungsbeispiel der fahrzeugseitige Teil 7 in seinem dem Wagenkasten 16 zugewandten Seite eine Art schwalbenschwanzförmiger Nut 21 auf, in die das Betätigungsorgan 22 des Schubmechanismus 5 formschlüssig eingreift. Damit ist eine zuverlässige, tragfähige und kostengünstige Verbindung zwischen dem Schubmechanismus 5 und der wagenkastenseitigen Teleskop-Schiene geschaffen.

Gleichermaßen trägt die türblattseitige Schiene in ihrem oberen Bereich eine hinterschnittene Nut 23, auf die eine Dichtung 24 aufgebracht werden kann. Damit ist es möglich, auf eine zusätzliche Dichtungsmontageschiene zu verzichten und sowohl Bauteile als auch Baukosten zu sparen. Sollte eine Tür mit doppelter Abdichtung gewünscht werden, ist es selbstverständlich möglich, im oberen Bereich der Schiene 10, aber näher zum Wagenkasten 16 eine zweite Aufnahme für eine weitere, weiter innen liegende Dichtung vorzusehen.

Die fahrzeugseitigen und türblattseitigen Teile (Schienen) 7, 10 bestehen bevorzugt aus Aluminium-Stranggußprofil mit gehärteten Oberflächen, die Rollen 12, 13, 19 und 20 bestehen bevorzugt aus Kunststoff. Der Schlitten 8 kann aus Aluminium oder einem Stahlschmiedeteil bestehen. Da der Aufbau, die Berechnung und Auslegung von Teleskopen an sich bekannt ist und sich das erfindungsgemäße Teleskop in seinen mechanischen Eigenschaften nicht von anderen Teleskopen unterscheidet, ist es für den Fachmann auf dem Gebiet der Verwendung von Teleskopschienen leicht möglich, in Kenntnis der Erfindung die entsprechende Dimensionierung und Werkstoffauswahl zu treffen.

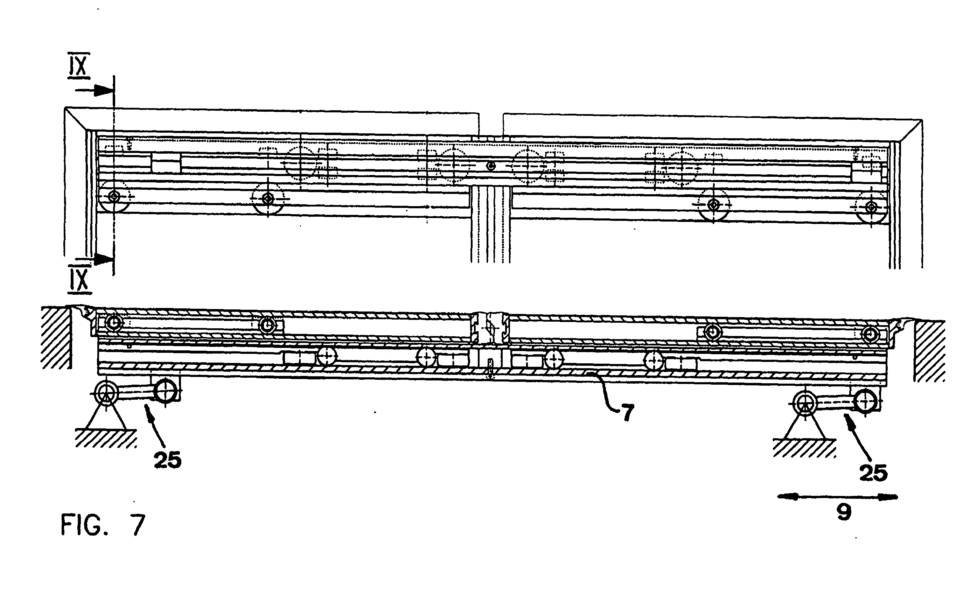

In den Fig. 7 bis 10 ist eine zweite Ausgestaltung der Erfindung dargestellt, die zeigt, daß das erfindungsgemäße Teleskop, wie es in den Fig. 1 bis 6 gezeigt ist, auch mit einem anderen Ausschubmechanismus als den dort gezeigten Schubmechanismus 5 verwendet werden kann.

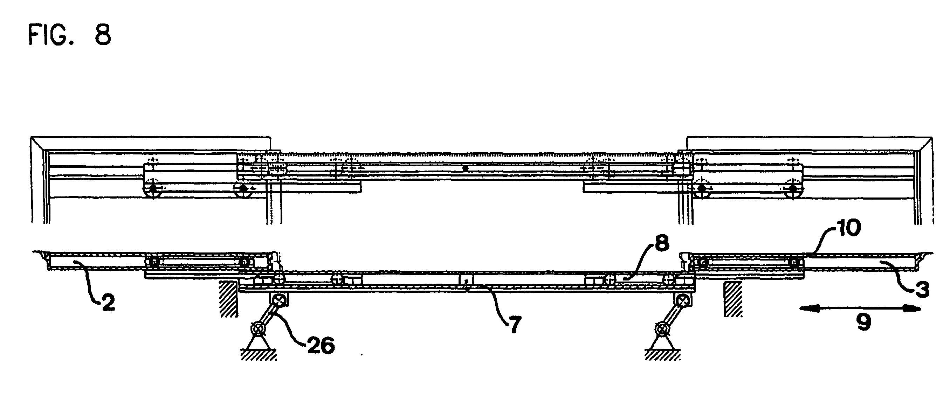

Es ist bei dieser zweiten Ausführungsform statt eines rein translatorischen Schubmechanismus 5 ein Schwenkmechanismus 25 vorgesehen, der die wagenkastenseitige Teleskop-Schiene 7 während der Ausstellbewegung auch etwas in Richtung der Teleskop-Achse 9 versetzt, wie dies aus einer Zusammenschau der Fig. 7 und 8 unmittelbar ersichtlich ist. Es ist daher bei geöffneter Tür, wie aus Fig. 8 ersichtlich, die Lage der Türblätter 2, 3 leicht asymmetrisch zur Türmitte. Dies kann vermieden werden, wenn der Schwenkmechanismus 25 nicht so, wie im gezeigten Ausführungsbeispiel in der eingeschwenkten Lage Schwenkhebel 26 aufweist, die im wesentlichen parallel zur Teleskop-Achse liegen, sondern eine Lage einnehmen, die im wesentlichen symmetrisch bezüglich der Teleskop-Achse 9 in ausgeschwenkter Lage verlaufen. Eine solche Vorrichtung benötigt aber entweder einen "Überkopf" angeordneten Mechanismus 25 oder eine größere Einbautiefe.

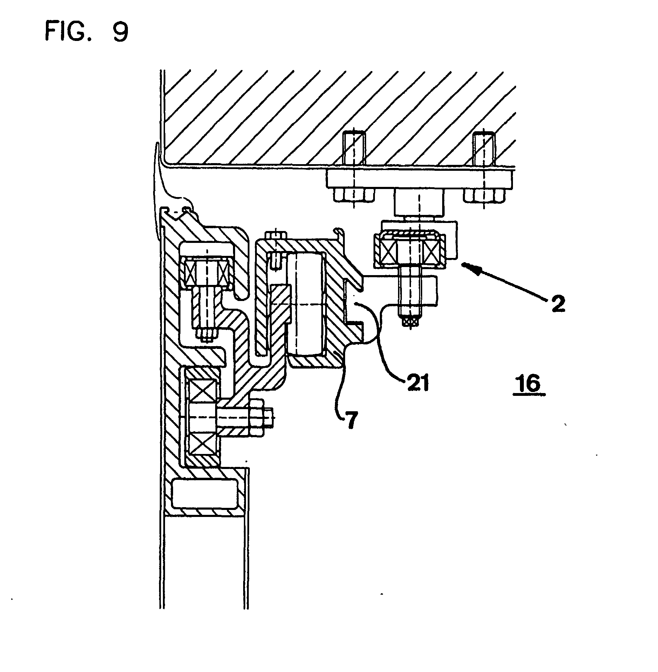

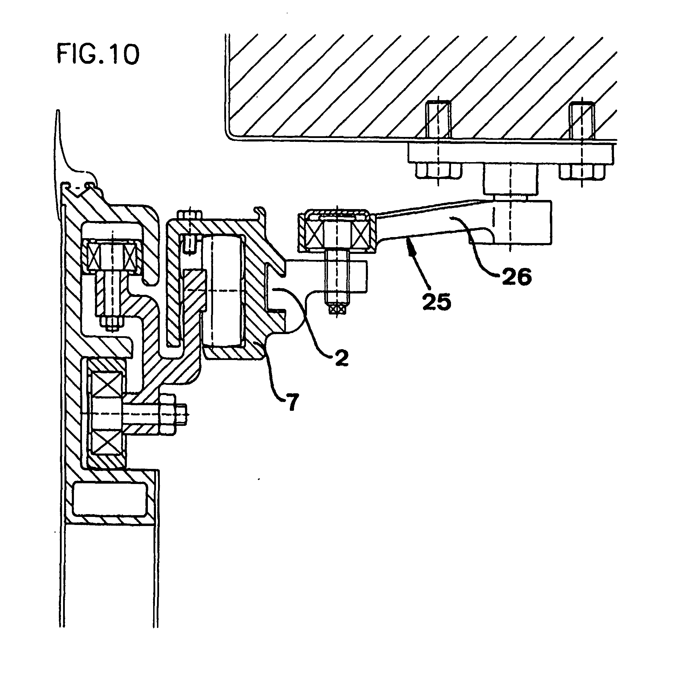

Die Fig. 9 und 10 zeigen den bei dieser Ausführungsform verwendeten Schwenkmechanismus, der ebenfalls mittels der Schwalbenschwanzhalterung 21 mit der wagenkastenseitigen Schiene 7 verbindbar ist.

Die anderen Bauteile entsprechen der ersten Ausführungsform. Bezüglich der Erläuterung wird auf die diesbezügliche Figurenbeschreibung verwiesen.

Die Erfindung ist nicht auf die dargestellten Ausführungsbeispiele beschränkt, sondern kann verschiedentlich abgewandelt werden. So ist es möglich, mehr als zwei Ausstellmechanismen 5, 25 vorzusehen oder eine andere Art von Ausschwenkmechanismus als die abgebildeten. Es ist auch nicht notwendig, daß das Profil der fahrzeugseitigen und türblattseitigen Teile (Teleskop-Schienen) 7, 10 und des Schlittens 8 in allen Details den ausgewählten Ausführungsbeispielen entspricht; wesentlich ist nur, daß die Zutrittsöffnungen zu diesen Teleskop-Schienen an ihrer Unterseite oder zumindest im unteren Bereich einer Seitenfläche angeordnet sind, um so den Zutritt von Schmutz- und Spritzwasser zu erschweren, das Abfließen bzw. Herausfallen von Flüssigkeiten und Fremdkörpern aber zu begünstigen. Es ist besonders wichtig, daß diese Profile keine unten geschlossenen Taschen aufweisen, die nach Art eines Ölsumpfs Fremdkörper und Spritzwasser ansammeln und so die Korrosion fördern.

Vorteilhafterweise werden die Profile mit allen zur Montage von zusätzlichen Bauteilen, wie Dichtungen od.dgl. notwendigen Fortsätzen, Leisten und Nuten hergestellt und ermöglichen so das Einsparen zusätzlicher Bauteile. Die Befestigung mittels der Schwalbenschwanzausbildung ist bevorzugt, da diese Befestigungsleiste mit hoher Genauigkeit während der Herstellung des Profiles mitgefertigt werden können und unabhängig von der benötigten Profillänge an jeder beliebigen Stelle zur Befestigung des Ausschubmechanismus 5, 25 zur Verfügung stehen, doch ist es selbstverständlich möglich, eine andere Art der Befestigung zu wählen.

## Patentansprüche

1. Teleskop für Schwenkschiebetüren (2,3) von Fahrzeugen, wobei ein fahrzeugseitiger Teil (7) des Teleskopes eine Bewegung (6) im wesentlichen normal zur Türblattebene vollführt, ein türblattseitiger Teil (10) des Teleskopes im wesentlichen entlang des fahrzeugseitigen Teils (7) verfahrbar ist, wobei zumindest ein Schlitten (8) als Zwischenteil vorgesehen ist, der entlang der beiden anderen Teile (7,10) verfahrbar ist und so die teleskopische Bewegung sicherstellt, wobei der fahrzeugseitige Teil (7) aus einem im wesentlichen rechteckigen Profil besteht, das an seiner Unterseite einen Längsschlitz (17') aufweist, aber ansonsten im wesentlichen geschlossen ist, und wobei der Schlitten (8) durch den Längsschlitz (17') in den fahrzeugseitigen Teleskopteil (7) ragt, **dadurch gekennzeichnet, daß** der Schlitten (8) mittels Rollen (19,20) im fahrzeugseitigen Teleskopteil (7) geführt ist und daß der fahrzeugseitige Teleskopteil (7) ohne unten geschlossene Taschen ausgeführt ist.

2. Teleskop nach Anspruch 1, **dadurch gekennzeichnet, daß** der türblattseitige Teleskopteil (10) aus einem Profil besteht und dass die horizontal-führenden Bahnen (14) in einem Querschnittsbereich des Profils angeordnet sind, der die Form eines umgekehrten "U" aufweist, und daß die vertikal-führenden Bahnen (17) in einem zum Wagenkasten (16) hin offenen, C-förmigen und bevorzugt unterhalb der horizontal-führenden Fühnungsbahnen (14) liegenden Querschnittsbereich des Profils angeordnet sind.

3. Teleskop nach einem der vorangehenden Ansprüche, **dadurch gekennzeichnet, daß** der Schlitten (8) in seinem rollenfreien Bereich einen Steg (15) aufweist, der die Öffnungen des türblattseitigen Teleskopteiles (10) weitestgehend abdeckt.

4. Teleskop nach einem der vorangehenden Ansprüche, **dadurch gekennzeichnet, daß** der fahrzeugseitige Teil (7) des Teleskopes auf der dem Fahrzeug zugewandten Seite eine schwalbenschwanzförmige Nut (21) aufweist.

## Claims

1. A telescopic mechanism for swinging-sliding doors (2,3) of vehicles, wherein a part (7) of the telescopic mechanism on the vehicle side carries out a movement (6) substantially normal to the plane of the door leaf, a part (10) of the telescopic mechanism on the door-leaf side can move substantially along the part (7) on the vehicle side, wherein at least one carriage (8) is provided as an intermediate part which can move along the two other parts (7,10) and thus ensures the telescopic movement, wherein the part (7) on the vehicle side comprises a substantially rectangular profile which on its underside has a longitudinal slot (17') but is otherwise substantially closed, and wherein the carriage (8) projects through the longitudinal slot (17') into the telescopic part (7) on the vehicle side, **characterised in that** the carriage (8) is guided by means of rollers (19,20) in the telescopic part (7) on the vehicle side without downwardly closed pockets.

2. A telescopic mechanism according to Claim 1, **characterised in that** the telescopic part (10) on the door-leaf side comprises a profile and **in that** horizontally guiding tracks (14) are disposed in a cross-sectional zone of the profile, which has the form of an inverted "U" shape, and **in that** vertically guiding tracks (17) are disposed in a C-shaped cross-sectional zone of the profile, which is open towards the coach body (16) and which preferably is situated under the horizontally guiding tracks (14).

3. A telescopic mechanism according to one of the preceding Claims, **characterised in that** in its roller-free zone the carriage (8) has a web (15) which covers to the greatest possible extent the openings of the telescopic part (10) on the door-leaf side.

4. A telescopic mechanism according to any one of the preceding Claims, **characterised in that** the part (7) of the telescopic mechanism on the vehicle side has on the side facing the vehicle a dovetailed groove (21).

## Revendications

1. Mécanisme télescopique pour des portes pivotantes coulissantes (2, 3) de véhicules, une partie (7) côté véhicule du mécanisme télescopique exécutant un mouvement (6) sensiblement perpendiculaire au plan du vantail de porte, une partie (10) côté vantail de porte du mécanisme télescopique étant mobile sensiblement le long de la partie (7) côté véhicule, au moins un chariot (8) étant prévu à titre de partie intermédiaire mobile le long des deux autres parties (7, 10) et assurant ainsi le mouvement télescopique, la partie (7) côté véhicule étant constituée par un profilé sensiblement rectangulaire qui présente sur sa face inférieure une fente longitudinale (17') mais qui est par ailleurs sensiblement fermée, et le chariot (8) pénétrant à travers la fente longitudinale (17') dans la partie télescopique (7) côté véhicule, **caractérisé en ce que** le chariot (8) est guidé dans la partie télescopique (7) côté véhicule au moyen de galets (19, 20) et **en ce que** la partie télescopique (7) côté véhicule est réalisée dépourvue de poches fermées en bas.

2. Mécanisme télescopique selon la revendication 1, **caractérisé en ce que** la partie télescopique (10) côté vantail de porte est constituée par un profilé, et **en ce que** les voies (14) de guidage horizontal sont agencées dans une zone de section transversale du profilé qui présente la forme d'un U inversé, et **en ce que** les voies (17) de guidage vertical sont agencées dans une zone de section transversale du profilé qui est ouverte vers le caisson (16), réalisée en forme de C, et située de préférence au-dessous des voies (14) de guidage horizontal.

3. Mécanisme télescopique selon l'une des revendications précédentes, **caractérisé en ce que** le chariot (8) présente dans sa zone dépourvue de galets une barrette (15) qui recouvre largement les ouvertures de la partie télescopique (10) côté vantail de porte.

4. Mécanisme télescopique selon l'une des revendications précédentes, **caractérisé en ce que** la partie (7) côté véhicule du mécanisme télescopique présente une gorge (21) en forme de queue d'aronde sur le côté tourné vers le véhicule.
